# EUROPEAN PATENT APPLICATION

(11) **EP 4 332 057 A1**
(43) Date of publication of application: **06.03.2024**
(21) Application number: 22796198.4
(22) Date of filing: 29.04.2022
(51) Int. Cl.: C01B 21/086, C01D 17/00, H01M 10/0566, H01M 10/052

(54) **METHOD FOR PRODUCING HIGH-PURITY CESIUM BISFLUOROSULFONYLIMIDE TO IMPROVE STABILITY OF LITHIUM BATTERY**

(30) Priority: 30.04.2021 KR 20210056332
(71) Applicant: Lee, Soon Ho, Gunsan-si Jeollabuk-do 54082 (KR)
(72) Inventor: Lee, Soon Ho, Gunsan-si Jeollabuk-do 54082 (KR)
(74) Representative: Jacobi, Markus Alexander
(86) International application number: PCT/KR2022/006146
(87) International publication number: WO 2022/231366

(57) **Abstract**

The present invention relates to a method for producing high-purity cesium bisfluorosulfonylimide to improve stability against the explosion of a battery by forming an effective solid electrolyte interphase (SEI) layer on an electrode surface.

## Description

### [Technical Field]

The present disclosure relates to a method for producing bis(fluorosulfonyl)imide cesium salt with high purity, which forms an effective solid electrolyte interphase (SEI) layer on an electrode surface to improve explosion stability of a battery.

### [Background Art]

Recently, as demand for the secondary battery industry related to mid- to large-sized products has increased, the importance of battery safety is constantly emerging. Moreover, interest in the lifespan of the battery is bound to be high. The stability and lifespan of the battery are influenced by other factors, but are also greatly influenced by a SEI (Solid Electrolyte Interphase) membrane.

The SEI membrane formed on a positive electrode acts as an ion tunnel and allows only lithium ions to pass therethrough. The SEI membrane acting the ion tunnel prevents organic solvent molecules with high molecular weight that move together with lithium ions in the electrolyte from being inserted between the layers of the negative electrode active material and destroying the negative electrode structure. Therefore, contact between the electrolyte and the negative electrode active material may be prevented such that decomposition of the electrolyte does not occur, and an amount of lithium ions in the electrolyte is reversibly maintained, thereby maintaining stable charging and discharging. Therefore, additives that assist in formation of the SEI membrane are added to the electrolyte solution.

In addition, electrolyte additives are being used to prevent decomposition of a positive-electrode surface or oxidation reaction of the electrolyte in high temperature or high voltage reaction, ultimately increasing the irreversible capacity of the secondary battery and extending its lifespan characteristics.

### [Disclosure]

### [Technical Problem]

When impurities are contained in the electrolyte additive, the formation of the SEI film becomes uneven, making it difficult to expect improvements in battery stability and lifespan characteristics.

Accordingly, a purpose of the present disclosure is to provide a method for producing bis(fluorosulfonyl)imide cesium salt with high purity using an electrolyte additive which forms a solid SEI film on the negative electrode and prevents decomposition of the positive electrode surface and oxidation reaction of the electrolyte in high temperature cycling, thereby improving the high-temperature cycle characteristics and low-temperature output of lithium secondary batteries.

### [Technical Solution]

In order to achieve the above purpose, the present disclosure provide a method for producing bis(fluorosulfonyl)imide cesium salt of a following Chemical Formula 2, wherein bis(fluorosulfonyl)imide or bis(fluorosulfonyl)imide salt (excluding cesium salt) of a following Chemical Formula 1 reacts with a cesium salt.

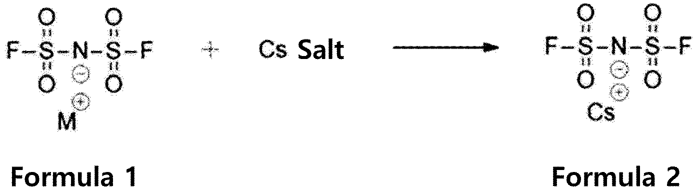

In the above Chemical Formula 1, M is H, Li, Na, K, Ca, Zn or an onium salt.

### [Advantageous Effects]

When the producing method of the present disclosure is used, the bis(fluorosulfonyl)imide cesium salt which is used as the electrolyte additive may be produced in a large quantity and at high purity.

The bis(fluorosulfonyl)imide cesium salt produced by the producing method in accordance with the present disclosure may be used as the electrolyte additive to improve the high and low temperature output of the battery and increasing the life and stability of the battery.

### [Best Mode]

Hereinafter, the present disclosure will be described in detail. Terms or words used in the present disclosure and claims should not be construed as being limited to their ordinary or dictionary meanings, and should be interpreted as having meaning and concept consistent with the technical idea of the present disclosure based on the principle that the inventor may appropriately define the concept of the terms in order to describe his or her invention in the best way.

Throughout the present disclosure and claims, unless otherwise specified, the term "comprise, comprises, or comprising" means including a stated element, step or group of elements, and steps, and is not used in the sense of excluding another element, step, or group of elements or group of steps.

The present disclosure provides a producing method of bis(fluorosulfonyl)imide cesium salt of a following Chemical Formula 2, wherein the method includes reacting a cesium salt with bis(fluorosulfonyl)imide or bis(fluorosulfonyl)imide salt (excluding cesium salt) of a following Chemical Formula 1.

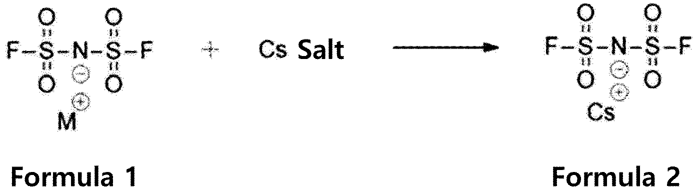

In the above Chemical Formula 1, M is H, Li, Na, K, Ca, Zn or an onium salt.

Conventionally, a method for producing lithium salt as a type of alkali metal salt of bis(fluorosulfonyl)imide at high purity is known. However, there is no known method for producing cesium salt of bisfluorosulfonyl imide with high purity. Cesium has low electronegativity among group I alkali elements and a large atomic radius, and thus its physical properties are different from those of other alkali metals such as lithium. In particular, the cesium salt of bis(fluorosulfonyl)imide has lower solubility in a polar organic solvent than the lithium salt of bis(fluorosulfonyl)imide has. Thus, it is not easy to produce the cesium salt of bis(fluorosulfonyl)imide with high purity.

Accordingly, the present inventors have worked hard to produce the cesium salt of bis(fluorosulfonyl)imide with high purity and completed the present disclosure.

In the method for producing bis(fluorosulfonyl)imide cesium salt according to the present disclosure, the method comprises reacting bis(fluorosulfonyl)imide or bis(fluorosulfonyl)imide salt (excluding cesium salt) of a following Chemical Formula 1 with cesium salt:

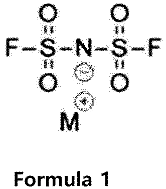

The cesium salt may be cesium acetate, cesium azide, cesium bicarbonate, cesium bisulfate, cesium carbonate, cesium chloride, cesium fluoride, cesium cyanide, cesium dodecaborate, cesium hydride, cesium hydroxide, cesium iodide, cesium nitrate, cesium oxalate, cesium oxide, cesium perchlorate, cesium sulfate, cesium sulfide, or cesium amide.

The cesium salt is preferably cesium hydroxide, which is commercially available and highly stable.

In the Chemical Formula 1 of the present disclosure, M is H, Li, Na, K, Ca, Zn, or onium ion.

The onium ion may be one of cations including N, S, or P.

The onium ion may be nitrogen-based onium ion such as imidazolium ion, pyrazolium ion, pyridinium ion, pyrrolidinium ion, piperidinium ion, morpholinium ion, quaternary ammonium ion, etc.; phosphorus-based onium ion such as quaternary phosphonium ion, tertiary phosphine ion, etc.; or sulfur-based onium ions such as sulfonium ions; etc.

Specifically, the quaternary ammonium ion may include ammonium ions tetramethylammonium, tetraethylammonium, tetrapropylammonium, tetrabutylammonium, tetrapentylammonium, tetraoctylammonium, ethyltrimethylammonium, and diethyldimethylammonium, etc.

The quaternary phosphonium ion may include tetramethylphosphonium, tetraethylphosphonium, tetrapropylphosphonium, tetrabutylphosphonium, tetraphenylphosphonium, methyltriphenylphosphonium, ethyltriphenylphosphonium, butyltriphenylphosphonium, benzyltriphenylphosphonium, dimethyldiphenylphosphonium, hydroxymethyltriphenylphosphonium, and hydroxyethyltriphenylphosphonium, etc.

The sulfonium ion is not particularly limited. Examples thereof may include sulfonium cation having an aliphatic substituent and sulfonium cation having an aromatic substituent.

The sulfonium cation having the aliphatic substituent may include trimethylphosphonium, (ethoxycarbonylmethyl)dimethylsulfonium, tris(2-hydroxyethyl)sulfonium, dimethyl(proparzyl)sulfonium, and (2-carboxyethyl)dimethylsulfonium, etc. Furthermore, examples of the sulfonium cation having the aromatic substituent may include triphenylsulfonium, phenyltetramethylenesulfonium, 1-methylthiophenium, diphenylmethylsulfonium, etc.

The M is preferably hydrogen or quaternary ammonium ion, and more preferably, hydrogen or NH₄.

The reaction between bis(fluorosulfonyl)imide or bis(fluorosulfonyl)imide salt (excluding cesium salt) of the Chemical Formula 1 and the cesium salt may be carried out without a solvent, or may be carried out under a solvent.

When the reaction between bis(fluorosulfonyl)imide or bis(fluorosulfonyl)imide salt (excluding cesium salt) of the Chemical Formula 1 and the cesium salt proceeds without a solvent, a cost of disposing of a waste solvent, and a cost of a purification process for separate removal of other impurities produced resulting from side reactions between the reactants and the solvent may be minimized, compared to the process using the solvent. This may lead to commercial and economic benefits such as cost reduction.

The reaction between the bis(fluorosulfonyl)imide and the cesium salt in accordance with the present disclosure may be performed under an organic solvent. When the bis(fluorosulfonyl)imide reacts with the cesium salt, heat may be generated, and acids may be produced as by-products. Therefore, when the above reaction is carried out in the organic solvent, the usable organic solvent should be a stable solvent which is not reactive with substances such as acids produced as the by-products and has no risk of explosion due to heat generation. Moreover, according to the present disclosure, a solvent whose boiling point is not excessively high, and thus the solvent may be prevented from remaining in the final product. The organic solvent may include at least one selected from a group consisting of ethyl acetate, butyl acetate, methanol, ethanol, propanol, isopropyl alcohol, butanol, isobutyl alcohol, t-butyl alcohol, dimethyl carbonate, diethyl carbonate, tetrahydrofuran, diethyl ether, isopropyl ether, methyl-t-butyl ether, 1,2-dimethoxyethane, dimethyl carbonate, diethyl carbonate, dipropyl carbonate, ethylmethyl carbonate, methylpropyl carbonate, ethylpropyl carbonate, ethylene carbonate, 1,2-butylene carbonate, 2,3-butylene carbonate, 1,2-pentylene carbonate, 2,3-pentylene carbonate, vinylene carbonate, fluoroethylene carbonate (FEC), acetonitrile, propionitrile, ethylene glycol, propylene glycol, butylene glycol, pentane, hexane, heptane, cyclohexane, benzene, toluene, dichloromethane, chloroform, and dichloroethane.

The reaction between bis(fluorosulfonyl)imide and the cesium salt in accordance with the present disclosure may be performed in water or a mixed solvent of water and an organic solvent.

When the reaction in accordance with the present disclosure is performed in an aqueous solution, this has the advantage of shortening the reaction time.

When the reaction in accordance with the present disclosure is performed in a mixed solvent of water and organic solvent, the reaction and the purification process to increase the production impurity may be simultaneously performed. This has the advantage of shortening a time required for layer separation and extraction after the reaction. When using the mixed solvent of water and an organic solvent, the organic solvent may preferably be a polar organic solvent that does not mix with water.

When the reaction according to the present disclosure is carried out under the solvent, the solvent may be used at 3 to 10 weight, preferably 3 to 7 weight, based on 1 weight of bis(fluorosulfonyl)imide. When the solvent is used in the above content, removal of by-products is easy and the resulting cesium salt of bis(fluorosulfonyl)imide may be obtained at high purity and high yield.

In one embodiment of the present disclosure, a content of the cesium salt used in the reaction may be in a range of 0.5 to 2 equivalents, preferably, 1 equivalent exclusive to 1.5 equivalents inclusive, based on 1 equivalent of the bis(fluorosulfonyl)imide or fluorosulfonylimide salt.

When the cesium salt is contained in the above equivalent range, the yield may be increased in the subsequent purification process, and after the reaction has been completed, no residue remains, which has the excellent effect of increasing purity.

In one embodiment of the present disclosure, a reaction temperature may be in a range of 0°C to 100°C, preferably 20°C to 80°C, and more preferably 40°C to 60°C.

When the reaction temperature is within the above range, the production of by-products may be suppressed, and color changes in the product may be prevented. Moreover, in a step of concentrating a filtrate to produce a concentrate, the same may be easily crystallized without using an expensive thin-film evaporator, which is an advantage according to the present disclosure.

In some embodiments of the present disclosure, a reaction time may range from 2 to 15 hours. When the reaction is carried out in the aqueous solution, there is an advantage that the reaction may be carried out for a short time, 2 to 5 hours, but the yield may decrease because the bis(fluorosulfonyl)imide cesium salt as produced is dissolved in water. On the contrary, when the reaction is carried out under the organic solvent, the reaction time may be in a range of 4 to 15 hours, which may be longer than when the reaction is carried out in water, but a high yield may be achieved.

In one embodiment of the present disclosure, a reaction pressure may be atmospheric pressure.

When the reaction pressure is within the above range, there is an advantage of eliminating the need for a separate pressure reducing or pressurizing device, thereby reducing an energy cost.

In one embodiment of the present disclosure, the method may further include a purification or filtering step to remove unreacted products, side reactants, and other foreign substances as produced in the step of reacting the bis(fluorosulfonyl)imide or bisfluorosulfonylimide salt with the cesium salt.

In the bis(fluorosulfonyl)imide cesium salt producing method in accordance with the present disclosure, the reaction may be performed without a solvent or under a solvent and then the purification using the organic solvent may be further carried out to suppress the production of impurities, thereby producing the high purity bis (fluorosulfonyl) imide cesium salt. The purification scheme may be configured to dissolve the bis(fluorosulfonyl)imide cesium salt in the heated organic solvent, filter out the impurities, and recrystallize the bis(fluorosulfonyl)imide cesium salt.

According to the present disclosure, the bis(fluorosulfonyl)imide cesium salt with reduced metal ion impurities may be obtained using the above purification scheme. According to the present disclosure, the high purity bis(fluorosulfonyl)imide cesium salt in which a content of potassium ions and sodium ions is reduced to 100 ppm, preferably 50 ppm, and more preferably 10 ppm or smaller may be obtained.

The solvent used in the purification of the bis(fluorosulfonyl)imide cesium salt is preferably an organic solvent that has sufficient solubility for the bis(fluorosulfonyl)imide cesium salt when the temperature thereof is raised up and does not have a high boiling point. The boiling point of the organic solvent is preferably 150°C or lower, more preferably 120°C or lower, and even more preferably 100°C or lower. When the boiling point of the organic solvent used for the purification is in the above range, the organic solvent may be easily removed and may not remain in the bis(fluorosulfonyl)imide cesium salt.

The organic solvent used in the purification of the bis(fluorosulfonyl)imide cesium salt is preferably an organic solvent that does not have a hydroxyl group or an amine group to suppress the production of impurities and facilitate the removal of impurities. The organic solvent may be preferably carbonates such as dimethyl carbonate, diethyl carbonate, dipropyl carbonate, ethylmethyl carbonate, methylpropyl carbonate, ethylpropyl carbonate, ethylene carbonate, 1,2-butylene carbonate, 2,3-butylene carbonate, 1,2-pentylene carbonate, 2,3-pentylene carbonate, vinylene carbonate, and fluoroethylene carbonate (FEC); ethers such as tetrahydrofuran, dimethyl ether, diethyl ether, isopropyl ether, methyl-t-butyl ether, and 1,2-dimethoxyethane; acetates such as ethyl acetate and butyl acetate; acetonitrile-based organic solvent, etc. However, the present disclosure is not limited thereto.

### [Mode]

Hereinafter, the present disclosure will be described with an example of the present disclosure. The various examples of the present disclosure may be combined with any other examples unless clearly indicated otherwise.

### [Example]

### <Example 1: Producing CsFSI from NH₄FSI using organic solvent>

10 g (0.05 mole) of NH₄FSI and 50 ml of methanol were added to a reactor, and were completely dissolved therein, and the reactor was cooled to 0°C. While 11.02 g (0.066 mole) of cesium hydroxide monohydrate was slowly added to the cooled reactor, a react occurred. After the addition, the temperature of the reactor was slowly raised up and a reaction occurred at 55°C for 12 hours. When the reaction had been completed, the reactor was cooled to room temperature and then a filtration was carried out thereon to remove by-products. A filtrate was concentrated under reduced pressure at 40°C to a maximum level, and then recrystallization was performed by adding 20ml of Toluene thereto. The resulting crystal was filtered to completely remove the filtrate therefrom and then was dried at 40°C to obtain 15.01 g of CsFSI crystal. (purity 99.0%, yield 96%)

### <Example 2: Producing CsFSI from NH₄FSI using distilled water>

10 g of NH₄FSI and 10 ml of distilled water were added to a reactor and were completely dissolved therein. Then, a mixture in which 11.02 g of cesium hydroxide monohydrate was dissolved in 40 ml of distilled water was slowly added thereto carefully such that the temperature thereof did not exceed 25°C. After the addition, a reaction occurred at 55°C for 4 hours. After the reaction had been completed, 30ml of butyl acetate was added thereto, and layer separation was carried out such that an organic layer was extracted. The above process was repeated three times. The obtained organic layer was concentrated under reduced pressure at 50°C to obtain 7.11 g of CsFSI crystals. (Purity 99.5%, yield 75%)

### <Example 3: Producing CsFSI from NH₄FSI using mixed solvent>

10 g of NH₄FSI and 20ml of butyl acetate were added to a reactor and were completely dissolved therein. Then, a mixture in which 11.02 g of cesium hydroxide monohydrate was dissolved in 40 ml of distilled water was slowly added thereto carefully such that the temperature thereof did not exceed 25°C. After the addition, a reaction occurred at 55°C for 4 hours. After the reaction had been completed, layer separation was carried out such that an organic layer was extracted. Then, 30ml of butyl acetate was added thereto. The above process was repeated three times. The obtained organic layer was concentrated under reduced pressure at 50°C to obtain 9.48 g of CsFSI crystals. (Purity 99.3%, yield 78%)

### <Example 4: Producing CsFSI from NH₄FSI in solvent-free manner>

10 g of NH₄FSI and 8.47 g of cesium hydroxide monohydrate were added to a reactor cooled to 0°C and were stirred therein. Thus, a reaction progressed to produce a mixed liquid. The reaction was carried out at 0°C for 30 minutes, and then the temperature was raised up and a reaction was carried out at 55°C for 8 hours. When the reaction had been completed, the reaction product was completely dried under reduced pressure at 40°C. 20ml of butyl acetate was added to the completely dried particles which in turn were dissolved therein, and a filtering was performed thereon. The filtrate was completely dried at 40°C to obtain 14.69 g of CsFSI crystals. (Purity 98.5%, yield 93%)

### <Example 5: Producing CsFSI from HFSI using organic solvent >

9.73 g (0.058 mole) of cesium hydroxide monohydrate and 50 ml of butyl acetate were added to a reactor which in turn was cooled to -10°C. While 10g (0.055mole) of HFSI was slowly and dropwise thereto so that the temperature did not exceed 0°C, a reaction occurred. After the addition, the temperature was slowly raised up and a reaction occurred at room temperature for 2 hours. After the reaction had been completed, the by-products are removed therefrom via filtration. The filtrate is concentrated under reduced pressure at 40°C to a maximum level, and then recrystallization was performed by adding 20ml of Toluene thereto. The resulting crystals was filtered to completely remove the filtrate therefrom and then dried at 40°C to obtain 16.42 g of CsFSI crystals. (Purity 99.0%, yield 95%)

### <Example 6: Producing CsFSI from HFSI using distilled water >

9.73 g of cesium hydroxide monohydrate and 50 ml of distilled water were added to a reactor which was cooled to 3°C. While 10g of HFSI was dropwise slowly added thereto such that the temperature did not exceed 10°C, a react occurred. After the dropwise addition, a react occurred at low temperature for 30 minutes, and then the temperature was slowly raised up and a reaction occurred at room temperature for 2 hours. After the reaction had been completed, 30 ml of butyl acetate was added thereto, and the organic layer is separated and extracted. The above process was repeated twice.

The thus obtained organic layer was concentrated under reduced pressure at 50°C to obtain 16.07 g of CsFSI crystals. (Purity 99.5%, yield 93%)

### <Example 7: Producing CsFSI from HFSI using mixed solvent>

20ml of butyl acetate was added to a reactor which was cooled to -10°C, and then 10g of HFSI was slowly add thereto in a dropwise manner. After the dropwise addition, a mixture in which 9.73g of cesium hydroxide monohydrate was dissolved in 40ml of distilled water was slowly added thereto carefully such that the temperature did not exceed 25°C. After the addition, a react occurred at 55°C for 4 hours. After the reaction was over, the organic layer is separated and extracted, and then 30 ml of butyl acetate was added again thereto. The above process was repeated twice. The thus obtained organic layer was concentrated under reduced pressure at 50°C to obtain 9.50 g of CsFSI crystals. (Purity 99.5%, yield 55%)

### <Example 8: Producing CsFSI from HFSI in solvent-free manner>

9.73 g of cesium hydroxide monohydrate was added to the reactor. The reactor was cooled to 0°C. While slowly adding 10 g of HFSI thereto in a dropwise manner, a reaction occurred. Since heat is generated during the reaction. The temperature was controlled carefully so as not to exceed 20°C. After the dropwise addition, stirring was carried out at 0°C for 1 hour, then the temperature was slowly raised up and a reaction occurred at 55°C for 2 hours. When the reaction had been completed, the reaction product was completely dried under reduced pressure at 40°C. 20ml of butyl acetate was added to the completely dried particles, which in turn were dissolved therein, and then a filtering was performed thereon. The filtrate was completely dried at 40°C to obtain 15.55 g of CsFSI crystals. (Purity 99.0%, yield 90%)

The reaction between the bis(fluorosulfonyl)imide and the cesium salt in accordance with the present disclosure may be performed under the organic solvent, the water, or the mixed solvent of water and the organic solvent. According to Table 1 below, when the water is used alone or using the mixed solvent of the organic solvent/water, the yield decreases due to loss due to the solubility of the bis(fluorosulfonyl)imide cesium salt as produced in the water, while the purity thereof increases. On the contrary, when the rection is performed under the organic solvent, no waste water is generated, a drying time is short, and thus this scheme is advantageous in terms of energy and achieve a high yield.

**[Table 1]**

| Examples | Example 1 | Example 2 | Example 3 |
|---|---|---|---|
| Solvent | Organic solvent | Water | Mixed solvent of water/organic solvent |
| Whether wastewater treatment cost incurred? | No | Yes | Yes |
| Reaction time | 12 hours | 4 hours | 4 hours |
| Purification and drying time | 2 hours | 12 hours | 12 hours |
| Yield | 95% | 75% | 48% |
| Purity | 99.0% | 99.5% | 99.3% |

### <Example 9: Purification of CsFSI>

10 g of CsFSI produced in each of Examples 1 to 8 and 70 ml of dimethyl carbonate were added to the reactor which in turn was heated to 60°C, such that CsFSI produced in each of Examples 1 to 8 was completely dissolved in the dimethyl carbonate to prepare a solution. The prepared solution was filtered in a hot state to completely remove undissolved insoluble matter therefrom. The resulting solution was concentrated under reduced pressure until crystals precipitated. When the crystals began to precipitate, the solution was cooled to -10°C and recrystallization thereof was performed for 3 hours. When the crystallization had been completed, filtration under reduced pressure was performed thereon such that the crystals were obtained. The crystals were completely dried at 40°C for 12 hours to obtain 9.1 g of high purity CsFSI crystals (purity 99.9%, yield 91%).

The moisture of the obtained CsFSI crystals was measured using a Karl Fischer moisture measuring device, and HF and Cl⁻ contents therein were analyzed using ion chromatography. A content of a metal component was measured using inductively-coupled plasma optical emission spectroscopy (ICP-OES). The results are shown in Table 2 and Table 3. Table 2 further indicates a reference value generally required for secondary battery additives.

According to Tables 2 and 3 below, it may be identified that high purity CsFSI can be obtained when producing the same using the producing method of the present disclosure.

**[Table 2**

| Test items | Reference values | Results |
|---|---|---|
| Appearance | White powder | White powder> |
| Water content (KF) | ≤ 100 ppm | 4.1 ppm |
| Hydrogen fluoride <HF> | ≤ 100 ppm | 3 ppm |
| Purity (IC) | ≥ 99.0 % | 99.9 % |
| Cl⁻ (IC) | ≤ 10 ppm | N/D |

**[Table 3]**

| Metal | Na | Mg | Al | K | Ca | Mn | Fe | Co | Ni | Cu | /Z n | As | Sr | Ag | Ba | Cd | Pb | Cr | Hg |
|---|---|---|---|---|---|---|---|---|---|---|---|---|---|---|---|---|---|---|---|
| Conten t | 0. 5 | N/ D | N/ D | 0. 6 | N/ D | N/ D | N/ D | N/ D | N/ D | N/ D | N/ D | N/ D | N/ D | N/ D | N/ D | N/ D | N/ D | N/ D | N/ D |
| Total | <5ppm | | | | | | | | | | | | | | | | | | |

### Industrial applicability

The bis(fluorosulfonyl)imide cesium salt produced by the method in accordance with the present disclosure has the high purity and may be used as an electrolyte additive for the secondary batteries.

## Claims

1. A method for producing bis(fluorosulfonyl)imide cesium salt of a following Chemical Formula 2, wherein the method comprises reacting bis(fluorosulfonyl)imide or bis(fluorosulfonyl)imide salt (excluding cesium salt) of a following Chemical Formula 1 with cesium salt: 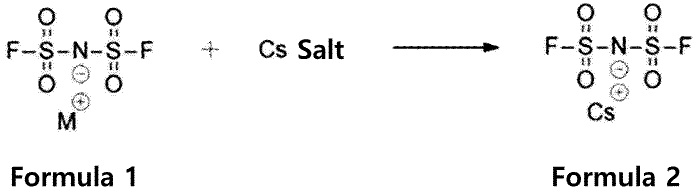 wherein in the Chemical formula 1, M is H, Li, Na, K, Ca, Zn, or onium ion.

2. The method for producing the bis(fluorosulfonyl)imide cesium salt of claim 1, wherein the cesium salt is cesium acetate, cesium azide, cesium bicarbonate, cesium bisulfate, cesium carbonate, cesium chloride, cesium fluoride, cesium cyanide, cesium dodecaborate, cesium hydride, cesium hydroxide, cesium iodide, cesium nitrate, cesium oxalate, cesium oxide, cesium perchlorate, cesium sulfate, cesium sulfide, or cesium amide.

3. The method for producing the bis(fluorosulfonyl)imide cesium salt of claim 1, wherein the onium ion is a cation including N, S, or P.

4. The method for producing the bis(fluorosulfonyl)imide cesium salt of claim 3, wherein the onium ion is imidazolium ion, pyrazolium ion, pyridinium ion, pyrrolidinium ion, piperidinium ion, morpholinium ion, quaternary ammonium ion, quaternary phosphonium ion, tertiary phosphine ion or sulfonium ion.

5. The method for producing the bis(fluorosulfonyl)imide cesium salt of claim 1, wherein M is hydrogen or NH₄.

6. The method for producing the bis(fluorosulfonyl)imide cesium salt of claim 1, wherein the method further comprises performing purification using an organic solvent after the reaction between the bis(fluorosulfonyl)imide or bis(fluorosulfonyl)imide salt (excluding cesium salt) and the cesium salt.

7. The method for producing the bis(fluorosulfonyl)imide cesium salt of claim 2, wherein the cesium salt is cesium hydroxide.

8. The method for producing the bis(fluorosulfonyl)imide cesium salt of claim 1, wherein the reaction is performed without a solvent or under an organic solvent.

9. The method for producing the bis(fluorosulfonyl)imide cesium salt of claim 8, wherein the organic solvent includes at least one selected from a group consisting of ethyl acetate, butyl acetate, methanol, ethanol, propanol, isopropyl alcohol, butanol, isobutyl alcohol, t-butyl alcohol, dimethyl carbonate, diethyl carbonate, tetrahydrofuran, diethyl ether, isopropyl ether, methyl-t-butyl ether, 1,2-dimethoxyethane, dimethyl carbonate, diethyl carbonate, dipropyl carbonate, ethylmethyl carbonate, methylpropyl carbonate, ethylpropyl carbonate, ethylene carbonate, 1,2-butylene carbonate, 2,3-butylene carbonate, 1,2-pentylene carbonate, 2,3-pentylene carbonate, vinylene carbonate, fluoroethylene carbonate (FEC), acetonitrile, propionitrile, ethylene glycol, propylene glycol, butylene glycol, pentane, hexane, heptane, cyclohexane, benzene, toluene, dichloromethane, chloroform, and dichloroethane.

10. The method for producing the bis(fluorosulfonyl)imide cesium salt of claim 1, wherein the cesium salt at a 0.5 to 2 equivalents based on 1 equivalent of the bis(fluorosulfonyl)imide or bisfluorosulfonylimide salt (excluding cesium salt) reacts therewith.
